# EUROPÄISCHE PATENTANMELDUNG

(11) **EP 3 878 830 A1**
(43) Veröffentlichungstag der Anmeldung: **15.09.2021**
(21) Anmeldenummer: 21156288.9
(22) Anmeldetag: 10.02.2021
(51) Int. Cl.: C05F 11/00, C05C 9/00, C05F 5/00

(54) **DÜNGER AUF LUPINENBASIS**

(30) Priorität: 12.03.2020 DE 102020106776
(71) Anmelder: Eurogreen GmbH, 57520 Rosenheim (DE)
(72) Erfinder: Peters, Thomas, 56649 Nickenich (DE); Albracht, Dr. Rainer, 57629 Malberg/Ww. (DE)
(74) Vertreter: Werhahn, Jasper Carl

(57) **Zusammenfassung**

Die Erfindung betrifft ein Düngemittel für Pflanzen, wobei das Düngemittel proteinhaltiges Material aus Leguminosen umfasst.

## Beschreibung

Die Erfindung betrifft ein Düngemittel für Pflanzen sowie die Verwendung dieses Düngemittels zur Düngung von Pflanzen, insbesondere zur Langzeitdüngung von Pflanzen.

Bereits seit den Frühzeiten der Landwirtschaft haben Menschen Düngemittel benutzt. Unter Düngemittel sind dabei Stoffe zu verstehen, die in der Landwirtschaft eingesetzt werden, um das Wachstum von Pflanzen zu stärken, indem das Nährstoffangebot des Bodens für diese Pflanzen erhöht wird. Viele für das Pflanzenwachstum notwendige Nährstoffe sind in Böden entweder nicht in ausreichender Menge oder zumindest nicht in ausreichend verfügbarer Form vorhanden. Dabei ist zwischen Makronährstoffen und Mikronährstoffen zu unterscheiden. Zu den wichtigsten Makronährstoffen gehören Stickstoff, Kalium, Phosphor, Magnesium, Schwefel und Kalzium. Zu den wichtigsten Mikronährstoffen gehören Bor, Chlor, Kupfer, Eisen, Mangan, Molybdän, Nickel und Zink. Als besonders limitierender Faktor hat sich der Gehalt der Böden an Stickstoff, in für Pflanzen verfügbarer Form, erwiesen.

Die wohl älteste Form der Düngung besteht in der Verwendung von tierischen und menschlichen Fäkalien, die einen hohen Gehalt an Stickstoff aufweisen. Auch heute noch findet eine umfangreiche Verwendung von Gülle, Mist oder ähnlichen Substanzen tierischen Ursprungs zur Düngung statt. Nachteilig an dieser Form des Düngens ist einerseits die Verbindung dieser Düngemittel mit der (Massen-)Tierhaltung und den damit verbundenen ökologischen und wirtschaftlichen Folgen. Darüber hinaus weisen Gülle und ähnliche Stickstoffdünger tierischen Ursprungs den Nachteil auf, dass ein Großteil des Stickstoffs in einer löslichen und schnell verfügbaren Form liegt und es somit zu Beginn der Düngung zu einem Überangebot an Stickstoff kommen kann, während in der darauffolgenden Zeit bereits ein Großteil des Düngers verbraucht bzw. durch Ausschwemmung verlorengegangen ist. Darüber hinaus unterliegen die stickstoffhaltigen Verbindungen der Gülle in einem nicht unerheblichen Ausmaß der, enzymatischen oder nicht-enzymatischen, Zersetzung. Dies führt einerseits zu einer Verringerung der Effizienz dieses Düngemittels und andererseits zur Emission von klimaschädlichen Gasen beispielsweise in Form von Distickstoffmonoxid. Darüber hinaus weist die Düngung mit Gülle, Mist oder ähnlichen Produkten den Nachteil auf, dass stets die Gefahr der Kontamination von aus der Kultur gewonnenen Lebensmittel mit Erregern, wie beispielsweise E-coli oder ähnlichen, aus der Gülle oder dem Mist besteht. Der Gesetzgeber schreibt daher ein Einarbeiten bzw. ein Einwässern von Düngern mit tierischen Bestandteilen nach der Ausbringung vor.

Nach der Entdeckung der Bedeutung von bioverfügbaren Verbindungen des Stickstoffs für das Pflanzenwachstum durch Justus von Liebig erfolgte der Einsatz von Mineraldüngern in der Landwirtschaft, wobei zunächst Kalium- und Natriumnitrat aus dem Bergbau eingesetzt wurden. Im Jahre 1910 gelang durch das Haber-Bosch-Verfahren die günstige Herstellung von Ammoniak und nachfolgenden Stickstoffverbindungen aus dem Luftstickstoff. Diese Erfindungen ermöglichten die großindustrielle Herstellung von Mineraldünger.

Nachteilig an der Verwendung von Mineraldüngern ist einerseits der hohe Energieaufwand für ihre Erzeugung. Darüber liegt auch in Mineraldüngern der chemisch gebundene Stickstoff in einer pflanzenverfügbaren und löslichen Form vor. Auch die stickstoffhaltigen Verbindungen in Mineraldüngern unterliegen in nicht unerheblichem Ausmaß der, enzymatischen oder nicht-enzymatischen, Umsetzung, was zu einer Verringerung der Effizienz dieser Düngemittel einerseits und zur Emission von klimaschädlichen Gasen beispielsweise in Form von Distickstoffmonoxid andererseits führt. Mineralischer Stickstoff liegt häufig als Nitratstickstoff vor bzw. andere mineralische Stickstoffformen werden rasch in Nitrat umgewandelt, das eine hohe Mobilität aufweist und vor allem auf durchlässigen Böden in tiefere Bodenschichten und in das Grundwasser verlagert werden kann und so eine erhebliche Umweltbelastung verursachen kann. Darüber hinaus besteht auch bei Mineraldüngern die Gefahr eines ungünstigen Freisetzungsverlaufs nach dem Ausbringen des Düngers besteht, wobei zunächst eine Überdüngung auftritt, die von einer raschen Verarmung an pflanzenverfügbarem Stickstoff gefolgt wird.

Um diesem Problem zu begegnen, wurden Düngemittel entwickelt, bei denen das beispielsweise in Granulat-Form vorliegende Düngemittel zumindest teilweise mit einer Umhüllung aus einem synthetischen Polymer versehen wurde, um eine verzögerte Freisetzung des Düngers zu erzielen. Nachteilig ist hieran jedoch, neben dem zusätzlichen Kostenaufwand für diese Polymerumhüllung des Mineraldüngers, dass bei dem Zerfall dieser Umhüllung aus dem synthetischen Polymer Mikroplastik entsteht, was zu Umweltschäden führen kann, bzw. dass Polymere direkt in die Umwelt eingetragen werden.

Die Leguminosen (Hülsenfrüchtler) sind eine artenreiche Pflanzenfamilie aus der Gattung der Schmetterlingsblütenartigen. Aufgrund des hohen Eiweißgehaltes der Früchte und Samen weisen Leguminosen seit langer Zeit eine große Bedeutung für die menschliche und tierische Ernährung auf. Beispiele für Hülsenfrüchtler sind Erbsen, Bohnen, Linsen, Sojabohnen und Lupinen. Viele Leguminosen gehen in ihren Wurzelknöllchen eine Symbiose mit stickstofffixierenden Bakterien (Rhizobien) ein, was ihr Wachstum in hohem Maße unabhängig von der künstlichen Zufuhr von Stickstoff in die Böden macht.

Lupinen sind aufgrund ihres hohen Gehaltes an hochwertigem Eiweiß in den letzten Jahren vermehrt in den Blickpunkt des Interesses gelangt. Aufgrund ihres hohen Gehaltes an Bitterstoffen, insbesondere in Form von toxischen Alkaloiden sind Lupinen in ihrer Wildform für die menschliche Ernährung nicht geeignet. Durch Züchtung von Sorten mit wesentlich geringerem Anteil an Bitterstoffen und Giftstoffen entstand die Zuchtform der Süßlupinen, die der menschlichen und tierischen Ernährung dienen können. Allerdings sind diese bitterstoffarmen Süßlupinen gegenüber den Wildformen anfälliger für Krankheiten und Schädlinge. Lupinen zeichnen sich dadurch aus, dass sie in besonders hohem Maße Stickstoff fixieren und darüber hinaus ein gutes Aneignungsvermögen für Phosphor aufweisen. Aufgrund dieser Eigenschaften sind Lupinen ökologisch wertvoll, weil sie in hohem Umfang Luftstickstoff in pflanzenverfügbaren Stickstoff umwandeln, an mageren Standorten wachsen, ein hohes Phosphataneignungsvermögen aufweisen, daher eine gute Vorfruchtwirkung zeigen und Humus im Boden anreichern.

Ausgehend von diesem Stand der Technik lag der vorliegenden Erfindung die Aufgabe zu Grunde, Düngemittel bereitzustellen, die die vorherstehend genannten Nachteile nicht aufweisen.

Insbesondere lag der vorliegenden Erfindung die Aufgabe zu Grunde, ein Düngemittel bereitzustellen, das den Einsatz von tierischen Produkten vermeidet, den Einsatz von energieaufwändig hergestelltem Mineraldünger vermindert und das ein günstiges Freisetzungsprofil der im Dünger enthaltenen Nährstoffe, insbesondere von Stickstoff, aufweist, ohne dass beim Einsatz des Düngemittels Mikroplastik freigesetzt wird, gasförmige Stickstoffverluste auftreten und kein Nitrat in das Grundwasser verlagert wird.

Die der Erfindung zu Grunde liegende Aufgabe wird durch ein Düngemittel für Pflanzen gelöst, wobei das Düngemittel proteinhaltiges Material aus Leguminosen umfasst. Bei dem erfindungsgemäßen Düngemittel wird also das stickstoffhaltige Material aus tierischen Produkten wie Gülle und Mist bzw. der stickstoffhaltige Mineraldünger zumindest teilweise durch ein veganes Material ersetzt. Es hat sich überraschend gezeigt, dass durch den Einsatz von proteinhaltigem Material aus Leguminosen ein gut handhabbares und gut lagerfähiges Düngemittel hergestellt werden kann, das die bisher eingesetzten Düngemittel aus tierischen Produkten und/oder aus Mineraldünger zumindest teilweise ersetzen kann. Der im pflanzlichen Material gebundene Stickstoff ist nicht direkt pflanzenverfügbar und wird durch Mikroorganismen im Boden in eine pflanzenverfügbare Form überführt. Diese Umwandlung erfolgt zumindest teilweise bedarfsgerecht, da die Mikroorganismentätigkeit ebenso wie das Pflanzenwachstum u. a. von den Faktoren Temperatur und Feuchtigkeit abhängig ist.

In einer bevorzugten Ausführungsform weist das erfindungsgemäße Düngemittel einen Masseanteil an Stickstoff (N) von 3 - 5 Gew.-% N, gemessen als N bezogen auf das Gesamtgewicht des Düngemittels, auf. In einer besonders bevorzugten Ausführungsform weist das erfindungsgemäße Düngemittel einen Masseanteil an Stickstoff (N) von 4 - 12 Gew.-% N, gemessen als N bezogen auf das Gesamtgewicht des Düngemittels, auf. In einer besonders bevorzugten Ausführungsform weist das erfindungsgemäße Düngemittel einen Masseanteil an Stickstoff (N) von 5 - 10 Gew.-% N, gemessen als N bezogen auf das Gesamtgewicht des Düngemittels, auf.

Die Bestimmung des Anteils an Stickstoff (N) und der Stickstoffformen in dem Düngemittel erfolgen nach den in der Düngemittelgesetzgebung festgelegten Methoden,vorzugsweise nach dem VDLUFA Methodenbuch Band II. 4. Auflage 1995 mit 7. Ergänzung 2019.

In einer bevorzugten Ausführungsform umfasst das erfindungsgemäße Düngemittel Phosphat.

In einer bevorzugten Ausführungsform weist das erfindungsgemäße Düngemittel einen Masseanteil an Phosphat von 0,2 - 5 Gew.-% Phosphat, gemessen als P₂O₅ bezogen auf das Gesamtgewicht des Düngemittels, auf. In einer besonders bevorzugten Ausführungsform weist das erfindungsgemäße Düngemittel einen Masseanteil an Phosphat von 1 - 4 Gew.-% Phosphat, gemessen als P₂O₅ bezogen auf das Gesamtgewicht des Düngemittels, auf. In einer besonders bevorzugten Ausführungsform weist das erfindungsgemäße Düngemittel einen Masseanteil an Phosphat von 1,5 - 3 Gew.-% Phosphat, gemessen als P₂O₅ bezogen auf das Gesamtgewicht des Düngemittels, auf.

Die Bestimmung des Anteils an Phosphat in dem Düngemittel erfolgt dabei vorzugsweise nach dem Verfahren DIN EN ISO 11885 (E 22); 2009-09 (mod.), #A1 und #A2 .

In einer bevorzugten Ausführungsform umfasst das erfindungsgemäße Düngemittel Kalium.

In einer bevorzugten Ausführungsform weist das erfindungsgemäße Düngemittel einen Masseanteil an Kalium von 0,2 - 15 Gew.-% Kalium, gemessen als K₂O bezogen auf das Gesamtgewicht des Düngemittels, auf. In einer besonders bevorzugten Ausführungsform weist das erfindungsgemäße Düngemittel einen Masseanteil an Kalium von 1 - 12 Gew.-% Kalium, gemessen als K₂O bezogen auf das Gesamtgewicht des Düngemittels, auf. In einer besonders bevorzugten Ausführungsform weist das erfindungsgemäße Düngemittel einen Masseanteil an Kalium von 1,5 - 10 Gew.-% Kalium, gemessen als K₂O bezogen auf das Gesamtgewicht des Düngemittels, auf.

Die Bestimmung des Anteils an Kalium in dem Düngemittel erfolgt dabei vorzugsweise nach dem Verfahren DIN EN ISO 11885 (E 22); 2009-09 (mod.), #A1 und #A2 .In einer bevorzugten Ausführungsform umfasst das erfindungsgemäße Düngemittel Magnesium.

In einer bevorzugten Ausführungsform weist das erfindungsgemäße Düngemittel einen Masseanteil an Magnesium von 0,2 - 1 Gew.-% Magnesium, gemessen als MgO bezogen auf das Gesamtgewicht des Düngemittels, auf. In einer besonders bevorzugten Ausführungsform weist das erfindungsgemäße Düngemittel einen Masseanteil an Magnesium von 0,5 - 3 Gew.-% Magnesium, gemessen als MgO bezogen auf das Gesamtgewicht des Düngemittels, auf. In einer besonders bevorzugten Ausführungsform weist das erfindungsgemäße Düngemittel einen Masseanteil an Magnesium von 0,75 - 1,5 Gew.-% Magnesium, gemessen als MgO bezogen auf das Gesamtgewicht des Düngemittels, auf.

Die Bestimmung des Anteils an MgO in dem Düngemittel erfolgt dabei vorzugsweise nach dem Verfahren DIN EN ISO 11885 (E 22); 2009-09 (mod.), #A1 und #A2.

In einer bevorzugten Ausführungsform umfasst das erfindungsgemäße Düngemittel Eisen.

In einer bevorzugten Ausführungsform weist das erfindungsgemäße Düngemittel einen Masseanteil an Eisen von 0,1 - 2 Gew.-% Eisen, gemessen als Fe bezogen auf das Gesamtgewicht des Düngemittels, auf. In einer besonders bevorzugten Ausführungsform weist das erfindungsgemäße Düngemittel einen Masseanteil an Eisen von 0,2 - 1 Gew.-% Eisen, gemessen als Fe bezogen auf das Gesamtgewicht des Düngemittels, auf. In einer besonders bevorzugten Ausführungsform weist das erfindungsgemäße Düngemittel einen Masseanteil an Eisen von 0,3 - 0,6 Gew.-% Eisen, gemessen als Fe bezogen auf das Gesamtgewicht des Düngemittels, auf.

Die Bestimmung des Anteils an Eisen (Fe) in dem Düngemittel erfolgt dabei vorzugsweise nach dem Verfahren DIN EN ISO 11885 (E 22); 2009-09 (mod.), #A1 und #A2

In einer bevorzugten Ausführungsform umfasst das Düngemittel ein proteinhaltiges Material aus Lupinen. Aufgrund des hohen Proteingehaltes und aufgrund der guten Stickstofffixierung durch Lupinen ist proteinhaltiges Material aus Lupinen besonders geeignet. Insbesondere sind auch die Wildformen von Lupinen für die Bereitstellung des proteinhaltigen Materials für das erfindungsgemäße Düngemittel geeignet. Diese Wildformen sind aufgrund des hohen Bitter- und Giftstoffgehaltes für die menschliche und tierische Ernährung nicht oder nur wenig geeignet. Sie weisen allerdings gegenüber den Zuchtformen der Süßlupine einen höheren Proteingehalt auf und sind gegenüber Krankheiten und Schädlingen weniger anfällig, so dass sie in Bezug auf den Gesamtproteinertrag mit höheren Erträgen angebaut werden können und gleichzeitig verminderter Bedarf an Pflanzenschutzmitteln besteht. Der hohe Gehalt an Bitter- und Giftstoffen der Wildform der Lupine stellt für den Einsatz als proteinhaltiges Material in dem erfindungsgemäßen Düngemittel keinen Nachteil dar.

In einer bevorzugten Ausführungsform weist das erfindungsgemäße Düngemittel proteinhaltiges Material aus dem Samen von Lupinen auf. Aufgrund ihres hohen Proteingehaltes eignen sich die Samen von Lupinen besonders als proteinhaltiges Material für die erfindungsgemäßen Düngemittel. Dabei kann auch Bruchgut von Samen aus Lupinen eingesetzt werden, das in der Regel ein Abfallprodukt darstellt und daher günstig zu erhalten ist. In einer bevorzugten Ausführungsform weist das erfindungsgemäße Düngemittel daher ein proteinhaltiges Material aus dem Bruchgut von Samen von Lupinen auf.

Ein besonderer Vorzug des erfindungsgemäßen Düngemittels gegenüber Düngemitteln aus tierischen Produkten wie Mist oder Gülle sowie gegenüber Mineraldüngern besteht darin, dass sich gezeigt hat, dass die Freisetzung des Stickstoffs als Nährstoff für Pflanzen langsam und kontinuierlich erfolgt und somit der Effekt der Überdüngung und nachfolgenden Unterdüngung aufgrund des Freisetzungsprofils von Gülle/Mist bzw. Mineraldünger vermieden wird. Dieser Effekt des günstigen Freisetzungsprofils ist vermutlich auf die Einbindung nahezu des gesamten verfügbaren Stickstoffs in die Proteine der Pflanze zurückzuführen, die nur langsam abgebaut werden und somit zur langsamen und kontinuierlichen Freisetzung führen. Es hat sich gezeigt, dass gerade bei Verwendung von Samen bzw. Bruchgut von Samen aus Lupinen als proteinhaltiges Material für die erfindungsgemäßen Düngemittel ein günstiges Freisetzungsverhalten erzielt wird. Gasförmige Stickstoffverluste und Auswaschungsverluste durch Nitrat und die damit verbundene Umweltbelastung werden vermieden. Die gleichmäßige Nährstofffreisetzung erlaubt darüber hinaus die Applikation höherer Nährstoffgaben pro Düngung und längere Intervalle zwischen den Düngungen, was arbeitswirtschaftliche Vorteile hat und Kosten reduziert.

Je nach Jahreszeit und Kultur kann die Nährstofffreisetzung des organisch gebundenen Stickstoffs zu langsam erfolgen. Dies kann durch den Zusatz von mineralischen direkt oder schnell verfügbar werdenden Stickstoffformen ausgeglichen werden. In einer Ausführungsform der vorliegenden Erfindung ist das erfindungsgemäße Düngemittel daher so konzipiert, dass neben dem proteinhaltigen Material aus Leguminosen, ein Anteil an klassischen Düngemitteln, wie beispielsweise Düngemittel aus tierischen Produkten oder Mineraldünger enthalten ist.

Diese Ausführungsform des erfindungsgemäßen Düngemittels ermöglicht eine Steuerung des Freisetzungsprofils, da der Stickstoff aus dem Düngemittel tierischen Ursprungs bzw. aus dem Mineraldünger relativ schnell freigesetzt wird, während das proteinhaltige Material aus Leguminosen eine langsame Freisetzung des darin enthaltenen Stickstoffs bewirkt, so dass das Freisetzungsprofil der erfindungsgemäßen Düngemittel bei dieser Ausführungsform optimal auf die jeweiligen Anforderungen abgestimmt werden kann.

In einer Ausführungsform der vorliegenden Erfindung umfasst das erfindungsgemäße Düngemittel daher neben dem proteinhaltigen Material aus Leguminosen noch einen stickstoffhaltigen Mineraldünger, insbesondere in Form von Nitraten, Ammoniumsalzen, Harnstoff und/oder Harnstoffderivaten, sowie ggf. weiterer Mineraldüngerbestandteile.

In einer besonders bevorzugten Ausführungsform ist das erfindungsgemäße Düngemittel so konzipiert, dass das Düngemittel proteinhaltiges Material aus Lupinen in einer solchen Menge umfasst, dass der in dem proteinhaltigen Material aus Lupinen enthaltene Stickstoffgehalt 1,5 - 7,5 Gew.-% N, insbesondere 2 - 6 Gew.-% N, stärker bevorzugt 2,5 - 5 Gew.-% N, gemessen als N, bezogen auf das Gesamtgewicht des Düngemittels, beträgt, und das Düngemittel einen stickstoffhaltigen Mineraldünger, insbesondere in Form von Nitraten, Ammoniumsalzen, Harnstoff und/oder Harnstoffderivaten, in einer solchen Menge umfasst, dass der in dem stickstoffhaltigen Mineraldünger enthaltene Stickstoffgehalt 1,5 - 7,5 Gew.-% N, insbesondere 2 - 6 Gew.-% N, gemessen als N, stärker bevorzugt 2,5 - 5 Gew.-% N, bezogen auf das Gesamtgewicht des Düngemittels, beträgt.

In einer bevorzugten Ausführungsform liegt das erfindungsgemäße Düngemittel als Granulat oder Pulver vor. Es hat sich gezeigt, dass sich ein erfindungsgemäßes Düngemittel auf der Basis von proteinhaltigem Material aus Leguminosen in eine stabile Lagerform beispielsweise in Form eines Pulvers oder Granulat bringen lässt. Durch die gewählte Partikelgröße des Pulvers bzw. des Granulates kann dabei das Freisetzungsverhalten der in dem Düngemittel vorhandenen Nährstoffen, insbesondere das Freisetzungsverhalten des in dem Düngemittel vorhandenen bioverfügbaren Stickstoffs, gesteuert werden. Weiterhin werden durch die Granulierung die Streufähigkeit und die Gleichmäßigkeit der Nährstoffverteilung verbessert.

Als besonders vorteilhaft hat es sich dabei erwiesen, dass anders als bei Mineraldüngern keine Notwendigkeit besteht, die Düngemittelpartikel mit einer Umhüllung durch ein synthetisches Polymer zu versehen, um die Freisetzung der Nährstoffe, insbesondere die Freisetzung von Stickstoff, zu verlangsamen. Diese in Mineraldüngern häufig eingesetzte Umhüllung aus einem synthetischen Polymer zur Verlangsamung des Freisetzungsverhaltens ist in den letzten Jahren stark kritisiert worden, da dies zur Freisetzung von Mikroplastik führt, das sich in der Nahrungskette anreichert und zu erheblichen Schäden für Mensch, Tier und Umwelt führt.

In einer bevorzugten Ausführungsform liegt das erfindungsgemäße Düngemittel in einer Form vor, die frei von einer Umhüllung durch synthetisches Polymer ist. Insbesondere liegt das erfindungsgemäße Düngemittel vorzugsweise in Form eines Pulvers oder Granulats vor, das frei von einer Umhüllung durch synthetisches Polymer ist.

Vorzugsweise liegt das erfindungsgemäße Düngemittel als Granulat oder Pulver vor. In einer besonders bevorzugten Ausführungsform liegt das erfindungsgemäße Düngemittel als Granulat vor, wobei die Partikelgröße des Granulats vorzugsweise 0,5-5 mm beträgt. In einer bevorzugten Ausführungsform beträgt die Partikelgröße des Granulats 2 - 4 mm. In einer alternativen bevorzugten Ausführungsform beträgt die Partikelgröße des Granulats 0,5 - 1 mm.

In einer bevorzugten Ausführungsform umfasst das erfindungsgemäße Düngemittel zusätzlich ein Pflanzenstärkungsmittel in Form eines Pflanzenextrakts, das Widerstandsfähigkeit der gedüngten Pflanzen in Stresssituationen verbessert. Die Kombination einer gleichmäßigen, bedarfsgerechten Nährstoffversorgung der Pflanzen und die gleichzeitige Pflanzenstärkung ist eine wichtige vorbeugende Maßnahme zur Gesunderhaltung der Pflanzen. Weiterhin spart die Kombination des Düngemittels mit einem Pflanzenstärkungsmittel die Arbeitsgänge für die Ausbringung des Pflanzenstärkungsmittels ein.

In einer bevorzugten Ausführungsform umfasst das erfindungsgemäße Düngemittel ein Pflanzenstärkungsmittel in einer Menge von 0,01 Gew.-%, insbesondere 0,05 bis 0,5 Gew.-%, bezogen auf das Gesamtgewicht des Düngemittels.

In einer bevorzugten Ausführungsform ist das Pflanzenstärkungsmittel ausgewählt aus der Gruppe bestehend aus anorganischen Pflanzenstärkungsmitteln, wie Silikaten und/oder Carbonaten, organischen Pflanzenstärkungsmitteln, wie getrockneten Pflanzen und/oder Pflanzenextrakten, mikrobiellen Pflanzenstärkungsmitteln wie Pilze, Bakterien und/oder Extrakte aus Pilzen und/oder Bakterien.

In einer bevorzugten Ausführungsform umfasst das Pflanzenstärkungsmittel Extrakte aus der Pechnelke.

Die vorliegende Erfindung betrifft auch ein Verfahren zur Herstellung eines Düngemittels, insbesondere eines Düngemittels wie oben beschrieben, das durch die folgenden Schritte gekennzeichnet ist:
- Bereitstellen eines Düngemittel-Ausgangsmaterials umfassend ein proteinhaltiges Material aus Leguminosen,
- Optional Herstellen eines mit Pflanzennährstoffen angereichterten Düngemittel-Ausgangsmaterials, das durch den Zusatz von mineralischen Bestandteilen auf den Bedarf hinsichtlich der Nährstoffmenge, der Anlieferungsgeschwindigkeit und des Nährstoffverhältnisses der zu düngenden Kulturen abgestimmt ist,
- Mischen des Düngemittel-Ausgangsmaterials mit einem Presshilfsmittel, insbesondere in Form von Melasse, Vinasse, Ligninsulfonat, Ölen, Heißdampf und/oder Mischungen daraus,
- Verpressen der Mischung zu einem Düngemittel in Form eines Granulats oder Pulvers.

Ferner betrifft die vorliegende Erfindung auch ein Düngemittel, das nach dem Verfahren hergestellt ist.

Die vorliegende Erfindung betrifft auch die Verwendung des oben beschriebenen Düngemittels zur Düngung von Pflanzen.

Besonders bevorzugt erfolgt die erfindungsgemäße Verwendung zur Düngung aller Kulturen mit Nährstoffbedarf, wie Rasen, Sträucher, Gehölze, Stauden, Blühpflanzen, Gemüse, Obst und sämtliche landwirtschaftliche Kulturpflanzen.

Als besonders vorteilhaft hat es sich dabei erwiesen, dass das erfindungsgemäße Düngemittel zur Verwendung als Langzeitdünger geeignet ist. Eine solche Verwendung als Langzeitdünger erfordert also keine zusätzliche Maßnahme zur Verzögerung des Freisetzungsverhaltens von Nährstoffen, insbesondere von Stickstoff. Insbesondere erfordert eine solche Verwendung nicht den Einsatz einer Umhüllung der Düngemittelpartikel durch synthetische Polymere.

Die vorliegende Erfindung wird durch die nachfolgenden Beispiele noch näher illustriert:

### Beispiel 1:

### "LupiFert Frühjahr 10 + 2 + 5" Organisch-mineralischer NPK-Dünger auf pflanzlicher Basis Eigenschaften:

- Organisch-mineralsicher NPK Langzeit-Rasendünger mit organischem Langzeitstickstoff zur Frühjahrsdüngung von allen Rasenflächen.
- Die rasch wirkenden Stickstoffformen sorgen auch bei niedrigen Temperaturen im Frühjahr für ein schnelles Ergrünen, der organisch gebundene Langzeitstickstoff sichert eine anhaltende Wirkung.
- Der organisch gebundene Stickstoff stammt aus hochwertigen pflanzlichen Rohstoffen und zwar größtenteils aus regional angebauter Lupine. Der Dünger ist frei von tierischen Bestandteilen.
- Die Lupine ist ökologisch wertvoll, da sie Luftstickstoff in pflanzenverfügbaren Stickstoff umwandelt. Sie wächst auf mageren Standorten, verfügt über ein hohes Phosphataneignungsvermögen, besitzt eine gute Vorfruchtwirkung und bringt Vielfalt auf landwirtschaftlich genutzte Flächen.
- Die leicht verfügbare organische Substanz fördert die Anzahl und Aktivität der Mikroorganismen und dadurch die Bodenaktivität. Dies verbessert Wurzelwachstum und Widerstandsfähigkeit der Pflanzen.
- Das gleichförmige und staubfreie Granulat ist immer streufähig und lässt sich per Hand und mit Düngerstreuern gleichmäßig ausstreuen.

### Organisch-mineralischer Volldünger

| | | |
|---|---|---|
| 45 % | OS | organische Substanz i. d. TS |
| 10,0 % | N | Gesa mt-Stickstoff |
| 3,2 % | N | organisch gebundener Stickstoff |
| 2,0 % | P₂O₅ | Gesamt-Phosphat |
| 5,0 % | K₂O | Gesamt-Kaliumoxid |
| 4,7 % | K₂O | wasserlösliches Kaliumoxid |
| 1,0 % | MgO | Gesamt-Magnesiumoxid |
| 0,4 % | Fe | Gesamt-Eisen |

### Ausgangsstoffe:

Pflanzenreste aus der landwirtschaftlichen Erzeugung (Lupinen), Press- und Extraktionsrückstände von Ölsaaten (Rapsextraktionsschrot), Ammoniumsulfat, Harnstoff, Diammoniumphosphat, Kaliumchlorid, Magnesiumoxide, Eisen-II-Sulfat, Melasse (als Presshilfsmittel).

### Lagerungshinweise:

Trocken, verschlossen, vor direkter Sonneneinstrahlung geschützt und für Kinder und Haustiere unerreichbar lagern. Produkt nicht ins Abwasser oder freie Gewässer gelangen lassen. Nicht zum Verzehr geeignet. Bei sachgerechter Lagerung ist das Produkt über mehrere Jahre haltbar. Nach dem Ausbringen ist mit einer Veränderung der Produkteigenschaften in Abhängigkeit von Wärme, Feuchtigkeit und Bodenaktivität zu rechnen.

### Anwendungshinweise:

| | |
|---|---|
| Zierrasen: | 30 - 40 g/m² |
| Gebrauchsrasen: | 40 - 50 g/m² |
| Sportrasen: | 50 - 60 g/m² |

Bei der Bemessung der Aufwandmengen sind Nährstoffreserven, Bodenzustand, Beregnung und Jahreszeit zu berücksichtigen. Anwendung während der gesamten Vegetationsperiode. Gleichmäßig ausstreuen, bei Neukulturen anschließend einarbeiten, bei bestehenden Kulturen bei Trockenheit einregnen.
Nettomasse: 20 kg
Granulat: 2 - 4 mm
Langzeitstickstoffgehalt: 32 % des Gesamtstickstoffs liegen als organisch gebundener Langzeitstickstoff vor.

### Beispiel 2:

### "LupiFert Sommer 9 + 2 + 7" Organisch-mineralischer NPK-Dünger auf pflanzlicher Basis

### Eigenschaften:

- Organisch-mineralsicher NPK Langzeit-Rasendünger mit organischem Langzeitstickstoff zur Erhaltungsdüngung von allen Rasenflächen während der Hauptvegetationsperiode.
- Die rasch wirkenden Stickstoffformen sorgen für eine gute Startwirkung und schnelles Ergrünen, der organisch gebundene Langzeitstickstoff sichert eine anhaltende Wirkung und verhindert Stoßwachstum.
- Der organisch gebundene Stickstoff stammt aus hochwertigen pflanzlichen Rohstoffen und zwar größtenteils aus regional angebauter Lupine. Der Dünger ist frei von tierischen Bestandteilen.
- Die Lupine ist ökologisch wertvoll, da sie Luftstickstoff in pflanzenverfügbaren Stickstoff umwandelt. Sie wächst auf mageren Standorten, verfügt über ein hohes Phosphataneignungsvermögen, besitzt eine gute Vorfruchtwirkung und bringt Vielfalt auf landwirtschaftlich genutzte Flächen.
- Die leicht verfügbare organische Substanz fördert die Anzahl und Aktivität der Mikroorganismen und dadurch die Bodenaktivität. Dies verbessert Wurzelwachstum und Widerstandsfähigkeit der Pflanzen.
- Das gleichförmige und staubfreie Granulat ist immer streufähig und lässt sich per Hand und mit Düngerstreuern gleichmäßig ausstreuen.

### Organisch-mineralischer Volldünger

| | | |
|---|---|---|
| 53 % | OS | organische Substanz i. d. TS |
| 9,0 % | N | Gesa mt-Stickstoff |
| 3,7 % | N | organisch gebundener Stickstoff |
| 2,0 % | P₂O₅ | Gesamt-Phosphat |
| 7,0 % | K₂O | Gesamt-Kaliumoxid |
| 6,6 % | K₂O | wasserlösliches Kaliumoxid |
| 1,0% | MgO | Gesamt-Magnesiumoxid |
| 0,4 % | Fe | Gesamt-Eisen |

### Ausgangsstoffe:

Pflanzenreste aus der landwirtschaftlichen Erzeugung (Lupinen), Press- und Extraktionsrückstände von Ölsaaten (Rapsextraktionsschrot), Harnstoff, Diammoniumphosphat, Kaliumchlorid, Magnesiumoxide, Eisen-II-Sulfat, Melasse (als Presshilfsmittel).

### Lagerungshinweise:

Trocken, verschlossen, vor direkter Sonneneinstrahlung geschützt und für Kinder und Haustiere unerreichbar lagern. Produkt nicht ins Abwasser oder freie Gewässer gelangen lassen. Nicht zum Verzehr geeignet. Bei sachgerechter Lagerung ist das Produkt über mehrere Jahre haltbar. Nach dem Ausbringen ist mit einer Veränderung der Produkteigenschaften in Abhängigkeit von Wärme, Feuchtigkeit und Bodenaktivität zu rechnen.

### Anwendungshinweise:

| | |
|---|---|
| Zierrasen: | 30 - 40 g/m² |
| Gebrauchsrasen: | 40 - 50 g/m² |
| Sportrasen: | 50 - 60 g/m² |

Bei der Bemessung der Aufwandmengen sind Nährstoffreserven, Bodenzustand, Beregnung und Jahreszeit zu berücksichtigen. Anwendung während der gesamten Vegetationsperiode. Gleichmäßig ausstreuen, bei Neukulturen anschließend einarbeiten, bei bestehenden Kulturen bei Trockenheit einregnen.
Nettomasse: 20 kg
Granulat: 2 - 4 mm
Langzeitstickstoffgehalt: 41 % des Gesamtstickstoffs liegen als organisch gebundener Langzeitstickstoff vor.

### Beispiel 3:

### "LupiFert Herbst 5 + 2 + 10" Organisch-mineralischer NPK-Dünger auf pflanzlicher Basis

### Eigenschaften:

- Kaliumbetonter organisch-mineralsicher NPK Langzeit-Rasendünger mit organischem Langzeitstickstoff zur Herbstdüngung von allen Rasenflächen und bei erhöhtem Kaliumbedarf.
- Der reduzierte Stickstoffgehalt und die dosierte Stickstofffreisetzung fördern die Einlagerung von Reservestoff ohne das Wachstum zum Ende der Vegetationsperiode zu verstärken.
- Der hohe Kaliumgehalt verbessert die Widerstandsfähigkeit gegenüber Auswinterung und unterstützt die Einlagerung von Reservestoffen.
- Der organisch gebundene Stickstoff stammt aus hochwertigen pflanzlichen Rohstoffen und zwar größtenteils aus regional angebauter Lupine. Der Dünger ist frei von tierischen Bestandteilen.
- Die Lupine ist ökologisch wertvoll, da sie Luftstickstoff in pflanzenverfügbaren Stickstoff umwandelt. Sie wächst auf mageren Standorten, verfügt über ein hohes Phosphataneignungsvermögen, besitzt eine gute Vorfruchtwirkung und bringt Vielfalt auf landwirtschaftlich genutzte Flächen.
- Die leicht verfügbare organische Substanz fördert die Anzahl und Aktivität der Mikroorganismen und dadurch die Bodenaktivität. Dies verbessert Wurzelwachstum und Widerstandsfähigkeit der Pflanzen.
- Das gleichförmige und staubfreie Granulat ist immer streufähig und lässt sich per Hand und mit Düngerstreuern gleichmäßig ausstreuen.

### Organisch-mineralischer Volldünger

| | | |
|---|---|---|
| 55 % | OS | organische Substanz i. d. TS |
| 5,0 % | N | Gesa mt-Stickstoff |
| 3,4 % | N | organisch gebundener Stickstoff |
| 2,0 % | P₂O₅ | Gesamt-Phosphat |
| 10,0 % | K₂O | Gesamt-Kaliumoxid |
| 9,5 % | K₂O | wasserlösliches Kaliumoxid |
| 1,0 % | MgO | Gesamt-Magnesiumoxid |

### Ausgangsstoffe:

Pflanzenreste aus der landwirtschaftlichen Erzeugung (Lupinen), Press- und Extraktionsrückstände von Ölsaaten (Rapsextraktionsschrot), Harnstoff, Diammoniumphosphat, Kaliumchlorid, Magnesiumoxide, Melasse (als Presshilfsmittel).

### Lagerungshinweise:

Trocken, verschlossen, vor direkter Sonneneinstrahlung geschützt und für Kinder und Haustiere unerreichbar lagern. Produkt nicht ins Abwasser oder freie Gewässer gelangen lassen. Nicht zum Verzehr geeignet. Bei sachgerechter Lagerung ist das Produkt über mehrere Jahre haltbar. Nach dem Ausbringen ist mit einer Veränderung der Produkteigenschaften in Abhängigkeit von Wärme, Feuchtigkeit und Bodenaktivität zu rechnen.

### Anwendungshinweise:

| | |
|---|---|
| Zierrasen: | 50 - 60 g/m² |
| Gebrauchsrasen: | 60 - 70 g/m² |
| Sportrasen: | 70 - 80 g/m² |

Bei der Bemessung der Aufwandmengen sind Nährstoffreserven, Bodenzustand, Beregnung und Jahreszeit zu berücksichtigen. Anwendung während der gesamten Vegetationsperiode. Gleichmäßig ausstreuen, bei Neukulturen anschließend einarbeiten, bei bestehenden Kulturen bei Trockenheit einregnen.
Nettomasse: 20 kg
Granulat: 2 - 4 mm
Langzeitstickstoffgehalt: 68 % des Gesamtstickstoffs liegen als organisch gebundener Langzeitstickstoff vor.

## Patentansprüche

1. Düngemittel für Pflanzen, wobei das Düngemittel proteinhaltiges Material aus Leguminosen umfasst.

2. Düngemittel gemäß Anspruch 1, wobei der Masseanteil an Stickstoff (N) in dem Düngemittel 3 - 5 Gew.-% N, insbesondere 4 - 12 Gew.-% N, stärker bevorzugt 5 - 10 Gew.-% N, gemessen als N bezogen auf das Gesamtgewicht des Düngemittels beträgt.

3. Düngemittel gemäß Anspruch 1 oder 2, wobei das Düngemittel Phosphat umfasst, insbesondere 0,2 - 5 Gew.-% Phosphat, bevorzugt 1 - 4 Gew.-% Phosphat, stärker bevorzugt 1,5 - 3 Gew.-% Phosphat, gemessen als P₂O₅ bezogen auf das Gesamtgewicht des Düngemittels, umfasst.

4. Düngemittel gemäß mindestens einem der vorhergehenden Ansprüche, wobei das Düngemittel Kalium umfasst, insbesondere 0,2 - 15 Gew.-% Kalium, bevorzugt 1 - 12 Gew.-% Kalium, stärker bevorzugt 1,5 - 10 Gew.-% Kalium, gemessen als K₂O bezogen auf das Gesamtgewicht des Düngemittels, umfasst.

5. Düngemittel gemäß mindestens einem der vorhergehenden Ansprüche, wobei das Düngemittel Magnesium umfasst, insbesondere 0,2 - 1 Gew.-% Magnesium, insbesondere 0,5 - 3 Gew.-% Magnesium, stärker bevorzugt 0,75 - 1,5 Gew.-% Magnesium, gemessen als MgO bezogen auf das Gesamtgewicht des Düngemittels, umfasst.

6. Düngemittel gemäß mindestens einem der vorhergehenden Ansprüche, wobei das Düngemittel Eisen umfasst, insbesondere 0,1 - 2 Gew.-% Eisen, insbesondere 0,2 - 1 Gew.-% Eisen, stärker bevorzugt 0,3 - 0,6 Gew.-% Eisen, gemessen als Fe bezogen auf das Gesamtgewicht des Düngemittels, umfasst.

7. Düngemittel gemäß mindestens einem der vorhergehenden Ansprüche,
**dadurch gekennzeichnet, dass**
das Düngemittel ein proteinhaltiges Material aus Lupinen, insbesondere aus Wildlupinen umfasst.

8. Düngemittel gemäß mindestens einem der vorhergehenden Ansprüche,
**dadurch gekennzeichnet, dass**
das Düngemittel ein proteinhaltiges Material aus Samen von Lupinen, insbesondere aus Bruchgut von Samen von Lupinen umfasst.

9. Düngemittel gemäß mindestens einem der vorhergehenden Ansprüche,
**dadurch gekennzeichnet, dass**
das Düngemittel einen stickstoffhaltigen Mineraldünger umfasst, insbesondere in Form von Nitraten, Ammoniumsalzen, Harnstoff und/oder Harnstoffderivaten.

10. Düngemittel gemäß mindestens einem der vorhergehenden Ansprüche,
**dadurch gekennzeichnet, dass**
das Düngemittel proteinhaltiges Material aus Lupinen in einer solchen Menge umfasst, dass der in dem proteinhaltigen Material aus Lupinen enthaltene Stickstoffgehalt 1,5 - 7,5 Gew.-% N, insbesondere 2 - 6 Gew.-% N, stärker bevorzugt 2,5 - 5 Gew.-% N, bezogen auf das Gesamtgewicht des Düngemittels, beträgt, und das Düngemittel einen stickstoffhaltigen Mineraldünger, insbesondere in Form von Nitraten, Ammoniumsalzen, Harnstoff und/oder Harnstoffderivaten, in einer solchen Menge umfasst, dass der in dem stickstoffhaltigen Mineraldünger enthaltene Stickstoffgehalt 1,5 - 7,5 Gew.-% N, insbesondere 2 - 6 Gew.-% N, stärker bevorzugt 2,5 - 5 Gew.-% N, bezogen auf das Gesamtgewicht des Düngemittels, beträgt.

11. Düngemittel gemäß mindestens einem der vorhergehenden Ansprüche,
**dadurch gekennzeichnet, dass**
das Düngemittel als Granulat oder Pulver vorliegt, insbesondere als Granulat oder Pulver, das frei von einer Umhüllung durch ein synthetisches Polymer ist.

12. Düngemittel gemäß einem der vorhergehenden Ansprüche,
**dadurch gekennzeichnet, dass**
das Düngemittel ein Pflanzenstärkungsmittel umfasst, insbesondere in einer Menge von 0,01 bis 2 Gew.-%, besonders bevorzugt 0,05 bis 0,5 Gew.-%.

13. Verfahren zur Herstellung eines Düngemittels, insbesondere gemäß mindestens einem der Ansprüche 1 bis 12,
**gekennzeichnet durch**
die Schritte:
- Bereitstellen eines Düngemittel-Ausgangsmaterials umfassend ein proteinhaltiges Material aus Leguminosen,
- Optional Herstellen eines mit Pflanzennährstoffen angereichterten Düngemittel-Ausgangsmaterials, das durch den Zusatz von mineralischen Bestandteilen auf den Bedarf hinsichtlich der Nährstoffmenge, der Anlieferungsgeschwindigkeit und des Nährstoffverhältnisses der zu düngenden Kulturen abgestimmt ist,
- Mischen des Düngemittel-Ausgangsmaterials mit einem Presshilfsmittel, insbesondere in Form von Melasse, Vinasse, Ligninsulfonat, Ölen, Heißdampf und/oder Mischungen daraus und/oder Mischungen daraus,
- Verpressen der Mischung zu einem Düngemittel in Form eines Granulats oder Pulvers.

14. Düngemittel, hergestellt gemäß einem Verfahren nach Anspruch 13.

15. Verwendung eines Düngemittels gemäß mindestens einem der Ansprüche 1 bis 12 oder 14 zur Düngung von Pflanzen, insbesondere zur Düngung von allen Kulturen mit Nährstoffbedarf, wie Rasen, Sträucher, Gehölze, Stauden, Blühpflanzen, Gemüse, Obst und sämtliche landwirtschaftliche Kulturpflanzen, insbesondere zur Langzeitdüngung.
